# EUROPEAN PATENT APPLICATION

(11) **EP 0 783 950 A1**
(43) Date of publication of application: **16.07.1997**
(21) Application number: 96300159.9
(22) Date of filing: 09.01.1996
(51) Int. Cl.: B29C 45/44

(54) **Removal from the mold of injection-molded tie having strong pawl**

(71) Applicant: GB Electrical, Inc., Milwaukee, Wisconsin 53209 (US)
(72) Inventor: Sorensen, Soren Christian, Grand Cayman, Cayman Islands (KY); Sorensen, Jens Ole, Grand Cayman , Cayman Islands (KY)
(74) Representative: Wilson, Nicholas Martin

(57) **Abstract**

A method of injection molding a tie that includes a pawl (18) having at least one tooth (24) inside a locking head facing an abutment wall (16) uses a core (14) that defines at least a portion of a surface of the pawl that includes the at least one tooth. The core (14) is movable in relation to a first other mold part (10) and is separated from a second other mold part (12) not sooner than the first other mold part is separated from the second other mold part to thereby enable the pawl (18) to flex into a space (30) vacated by movement of the first other mold part during separation of the first other mold part from the second other mold part so that the tie can be removed from the mold without significantly damaging the at least one pawl tooth (24).

## Description

### BACKGROUND OF THE INVENTION

The present invention generally pertains to injection molding of a tie that is useful for forming a loop for retaining a bundle of elongated articles, such as cables. Such a tie is commonly known as a cable tie. The present invention is particularly directed to removal from the mold of a tie having at least one tooth on a pawl in the locking head of the tie.

One type of tie includes an elongated tongue with two ends and two broad sides, a locking head at one end of the tongue, a tip at the other end of the tongue and a set of ratchet teeth extending along one broad side of the tongue, wherein the locking head has sides defining an opening for receiving the tip of the tongue, the sides including a movable pawl that is hinged at one side of the opening and an abutment surface that is across the opening from the pawl, wherein the pawl has at least one pawl tooth disposed for engaging the set of ratchet teeth when the tip of the tongue has been inserted through the opening with the set of ratchet teeth facing the pawl. Such a tie is described in U.S. Patent No. 4,473,524 to Paradis.

A prior art method of injection molding such a tie includes the steps of:
(a) providing a mold that includes mold parts for defining a cavity between the mold parts in the general shape of the tie;
(b) injecting molten plastic material into the mold cavity;
(c) solidifying the plastic material in the mold cavity to form the tie;
(d) separating the mold parts to enable removal of the tie from the mold; and
(e) removing the tie from the mold.

The thickness of the free end of the pawl of such a tie formed by a typical prior art injection molding method is limited because the pawl must not be so thick that the pawl will not bend enough to avoid significant damage to the at least one tooth on the pawl when such a tie is removed from the mold. However, a pawl of such limited thickness also bends when a high pulling force is applied to the pawl in a direction opposite to the direction of insertion while the pawl is engaged with the set of ratchet teeth; and the pawl may be bent to such an extent that the pawl becomes disengaged from the ratchet teeth and enables the tongue to become unlocked from the locking head.

### SUMMARY OF THE INVENTION

The present invention provides a method of injection molding a tie, wherein the tie is removed from the mold without significantly damaging the at least one pawl tooth on a pawl of such a thickness that the pawl does not bend so much as to become disengaged from the ratchet teeth and of such a thickness that the at least one pawl tooth on the pawl would be significantly damaged if the tie were injection molding in accordance with typical prior art injection molding methods.

The present invention is a method of injection molding a tie that includes an elongated tongue with two ends and two broad sides, a locking head at one end of the tongue and a set of ratchet teeth extending along one broad side of the tongue, wherein the locking head has sides defining an opening for receiving the tongue, the sides include a movable pawl that is hinged at one side of said opening and an abutment wall that is across the opening from the pawl, and the pawl has at least one pawl tooth disposed for engaging the set of ratchet teeth when the tongue has been inserted through said opening with the set of ratchet teeth facing the pawl; the method comprising the steps of
(a) providing a mold that includes mold parts for defining a cavity between the mold parts in the general shape of the tie;
(b) injecting molten plastic material into the mold cavity;
(c) solidifying the plastic material in the mold cavity to form the tie;
(d) separating the mold parts to enable removal of the tie from the mold; and,
(e) removing the tie from the mold;
wherein step (a) comprises a said mold in which one of the mold parts is a core that defines at least a portion of the pawl that includes the at least one pawl tooth and in which a first other mold part is movable in relation to the core, and
wherein step (d) comprises the step of
(f) separating the core from a second other mold part not sooner than the first other mold part is separated from the second other mold part to thereby enable the pawl to flex into space vacated by movement of the first other mold part during separation of the first other mold part from the second other mold part so that the tie can be removed from the mold pursuant to step (e) without significantly damaging the at least one pawl tooth.

Additional features of the present invention are described with reference to the detailed description of the preferred embodiments.

### BRIEF DESCRIPTION OF THE DRAWING

FIG. 1 is sectional view illustrating formation of the abutment wall and the pawl portions of a tie in a mold utilized in a preferred embodiment of the injection molding method of the present invention.

FIG. 2 is sectional view illustrating relative separation of the mold parts shown in FIG. 1 at one stage of a preferred embodiment of the method of the present invention.

FIG. 3 is sectional view illustrating further relative separation of the mold parts shown in FIG. 1 at a stage in the preferred embodiment of the method of the present invention subsequent to the stage shown in FIG. 2.

FIG. 4 is sectional view illustrating ejection of the tie from the second mold part subsequent to the stage in the preferred embodiment of the method shown in FIG. 3.

### DETAILED DESCRIPTION

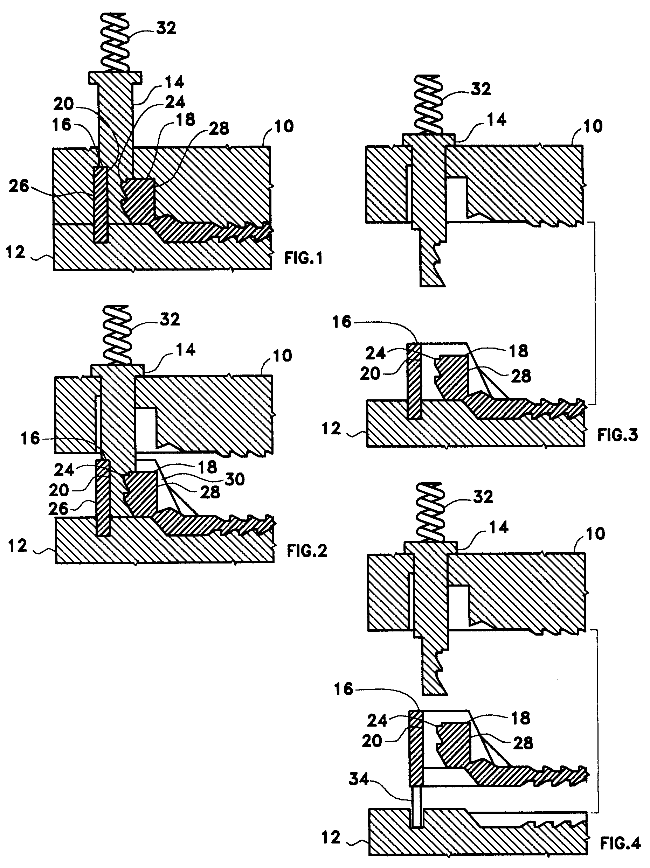

Referring to FIG. 1, in a preferred embodiment of the method of the present invention, a tie of the type described above is injection molded in a mold including a first mold part 10, a second mold part 12 and a core mold part 14. When the mold is closed, as shown in FIG. 1, the first mold part 10, the second mold part 12 and the core mold part 14 define a cavity therebetween in the general shape of the tie, which includes an abutment wail 16 having an abutment surface 20 and a pawl 18. The pawl 18 includes it least one tooth 24 facing the abutment wall 16. The first mold part 10 defines at least a portion of a surface 26 of the abutment wall 16 that is on the opposite side of the abutment wall 16 from the abutment surface 20 and at least a portion of the side 28 of the pawl 18 that is opposite the side of the pawl 18 that includes the at least one pawl tooth 24. The first mold part 10 ad the core mold part 14 are movable in relation to each other. When the mold is closed, the first mold part 10 joins the second mold part 12 at a parting line P.L. and the core mold part 14 also joins the second mold part 12 at the parting line P.L.

The core mold part 14 is disposed when the mold is closed for defining at least a portion of the pawl 18 that includes the at least one pawl tooth 24.

Molten plastic material is injected into the mold cavity and solidified therein to form the tie.

Referring to FIG. 2, the core mold part 14 is separated from the second mold part 12 not sooner than the first mold part 10 is separated from the second mold part 12 to thereby enable the pawl 18 to flex into a space 30 vacated by movement of the first mold part 10 during separation of the first mold part 10 from the second mold part 12 so that the tie can be removed from the mold without significantly damaging the at least one pawl tooth 24. The first mold part 10 is separated from the second mold part 12 in a direction normal to at least a portion of the parting line P.L. Preferably, the core mold part 14 remains in contact with the second other mold part until the first other mold part has moved to vacate the space 30 into which the pawl 18 thereby is able to flex. The core mold part 14 is retained in contact with the second mold part 12 by a spring 32 while the first mold part 10 is initially separated from the second mold part 12. In alternative embodiments (not shown) compressed air or hydraulic pressure is used to retain the core mold part 14 in contact with the second mold part 12 while the first mold part 10 is being separated from the second mold part 12. In alternative embodiments (not shown) compressed air, hydraulic pressure or the mere grip of the core mold part 14 between the abutment surface 20 and the at least one pawl tooth 24 is used to retain the core mold part 14 in contact with the second mold part 12 while the first mold part 10 is being separated from the second mold part 12.

Referring to FIG. 3, as the first core part 10 is further separated from the second mold part 12, the core mold part 14 is separated from the second mold part 12 while the tie is retained in the second mold part 12, whereupon the pawl flexes into the space 30 and the tie is removed from the core mold part without significantly damaging the at least one pawl tooth 24.

The tie is ejected from the second mold part 12 by protraction of ejector pins 34, as shown in FIG. 4, and removed from the mold.

In an alternative embodiment (not shown), the tie is retained on the core mold part 14 when the core mold part 14 is separated from the second mold part 12; and the tie is then ejected from the core mold part 14 by protraction of a pair of ejector pins.

When hydraulic pressure or compressed air is used to retain the core mold part 14 in contact with the second mold part 12 during separation of the first mold part 10 from the second mold part 12, variation of such hydraulic pressure or compressed air can be used to retract the core mold part 14 before or during ejection of the tie so that the tie does not become caught by or entangled with the protracted core mold part 14.

The method of the present invention enables injection molding of a tie in which the free end of the pawl 18 is relatively thick between the side of the pawl 18 that includes the at least one pawl tooth 24 and the side 28 of the pawl 18 that is opposite the side of the pawl 18 that includes the at least one pawl tooth 24, as shown in the Drawing. As a result one is able to injection mold a tie in which the free end of the pawl is of such thickness that the pawl is strong enough to resist bending when a high pulling force is applied to the pawl in a direction opposite to the direction of insertion while the pawl is engaged with the set of ratchet teeth so that the pawl may not be bent to such a extent that the pawl becomes disengaged from the ratchet teeth and enables the tongue to become unlocked from the locking head.

The advantages specifically stated herein do not necessarily apply to every conceivable embodiment of the present invention. Further, such stated advantages of the present invention are only examples and should not be construed as the only advantages of the present invention.

While the above description contains many specificities, these should not be construed as limitations on the scope of the present invention, but rather as exemplifications of the preferred embodiments described herein. Other variations are possible and the scope of the present invention should be determined not by the embodiments described herein but rather by the claims and their legal equivalents.

## Claims

1. A method of injection molding a tie that includes a elongated tongue with two ends and two broad sides, a locking head at one end of the tongue and a set of ratchet teeth extending along one broad side of the tongue, wherein the locking head has sides defining a opening for receiving the tongue, the sides include a movable pawl (18) that is hinged at one side of said opening and an abutment wall (16) that is across the opening from the pawl, and the pawl has at least one pawl tooth (24) disposed for engaging the act of ratchet teeth when the tone has been inserted through said opening with the set of ratchet teeth facing the pawl; the method comprising the steps of
(a) providing a mold that includes mold parts (10, 12 14) for defining a cavity between the mold parts in the general shape of the tie;
(b) injecting molten plastic material into the mold cavity;
(c) solidifying the plastic material in the mold cavity to form the tie;
(d) separating the mold parts to enable removal of the tie from the mold; and
(e) removing the tie from the mold;
wherein step (a) comprises providing a said mold in which one of the mold parts is a core (14) that defines at least a portion of the pawl (18) that includes the at least one pawl tooth (24) and in which a first other mold part (10) is movable in relation to the core; and
wherein step (d) comprises the step of
(f) separating the core (10) from a second other mold part (12) not sooner than the first other mold part is separated from the second other mold part to thereby enable the pawl (18) to flex into space (30) vacated by movement of the first other mold part during separation of the first other mold part from the second other mold part so that the tie can be removed from the mold pursuant to step (e) without significantly damaging the at least one pawl tooth (24).

2. A method according to Claim 1, wherein during step (f) the core (14) remains in contact with the second other mold part (12) until the first other mold part (10) has moved to vacate the space (30) into which the pawl (18) thereby is able to flex.

3. A method according to Claim 2, wherein during step (f), after the first other mold part (10) has moved to vacate said space (30), the first other mold part is further separated from the second other mold part (12) and the core (14) is separated from the second other mold part while the tie is retained in the second other mold part.

4. A method according to Claim 1, 2 or 3, wherein step (a) comprises providing a said mold in which the first other mold part (10) defines at least a portion of the side (28) of the pawl (18) that is opposite the side of the pawl that includes the at least one pawl tooth (24).

5. A method according to Claim 1, 2, 3 or 4, wherein the first and second other mold parts (10, 12) are joined at a parting line (P.L.) and step (d) comprises separating the first and second other mold parts in a direction normal to the parting line.
